(19) Europäisches Patentamt
European Patent Office
Office européen des brevets

(11) Veröffentlichungsnummer : **0 079 499**
**B1**

(12) # EUROPÄISCHE PATENTSCHRIFT

(45) Veröffentlichungstag der Patentschrift : **07.08.85**

(21) Anmeldenummer : **82109940.5**

(22) Anmeldetag : **27.10.82**

(51) Int. Cl.[4] : **A 01 N 43/58**, A 01 N 43/54 // (A01N43/58, 43:54, 35:04),(A01N43/54, 35:04)

(54) **Unkrautbekämpfungsmittel und dessen Verwendung.**

(30) Priorität : **12.11.81 CH 7266/81**

(43) Veröffentlichungstag der Anmeldung : **25.05.83 Patentblatt 83/21**

(45) Bekanntmachung des Hinweises auf die Patenterteilung : **07.08.85 Patentblatt 85/32**

(84) Benannte Vertragsstaaten : **AT DE FR IT SE**

(56) Entgegenhaltungen :
**US-A- 3 935 001**
**US-A- 3 954 875**

(73) Patentinhaber : **SIEGFRIED AKTIENGESELLSCHAFT**
**CH-4800 Zofingen (CH)**

(72) Erfinder : **Meyer, Jaques**
**Obere Brühlstrasse 1**
**CH-4800 Zofingen (CH)**
Erfinder : **Schären, Walter**
**Lärchenfeld 440**
**CH-4803 Vordemwald (CH)**

(74) Vertreter : **Jaeger, Klaus, Dr. et al**
**JAEGER & PARTNER Patentanwälte Bergstrasse 48 1/2**
**D-8035 München-Gauting (DE)**

**EP 0 079 499 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein selektives Unkrautbekämpfungsmittel, welches als herbizide Wirkstoffe 4-Methoxy-3,3'-dimethylbenzophenon und 5-Amino-4-chlor-2-phenyl-3(2H)-pyridazinon in einem Gewichtsverhältnis von 2 : 1 bis 1 : 2,5, vorzugsweise zwischen 1 : 1 und 1,12 : 1, und als weiteren herbiziden Wirkstoff 3-Cyclohexyl-5,6-trimethylen-uracil in einem Anteil von 3 bis 12 %, vorzugsweise 5 bis 7 % des Wirkstoff-Gesamtgewichtes enthält.

Die drei genannten Wirkstoffe sind an sich bekannt.

Das 4-Methoxy-3,3'-dimethylbenzophenon mit der Strukturformel

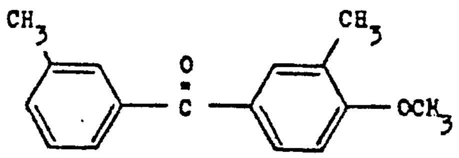

ist in US-PS 3 873 304 beschrieben und unter der freien Kurzbezeichnung Methoxyphenone bekanntgeworden als selektives Herbizid für den Reis- und Gemüse-Anbau mit Wirkung gegen verschiedene ein- und zweikeimblättrige Unkräuter. Für eine zufriedenstellende Wirkung sind jedoch relativ hohe Aufwandmengen von 3 bis 5 kg Wirkstoff pro Hektar erforderlich.

Das 5-Amino-4-chlor-2-phenyl-3(2H)-pyridazinon (1-Phenyl-4-amino-5-chlorpyridazon-(6)) der Strukturformel

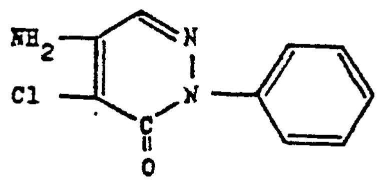

ist in DE-PS 1'105'232 beschrieben und unter den freien Kurzbezeichnungen Chloridazon und Pyrazon bekanntgeworden als selektiv wirkendes Herbizid zur Bekämpfung zahlreicher wichtiger zur Hauptsache zweikeimblättriger Unkräuter im Zucker- und Futterrübenanbau. Dabei werden je nach Schwere des Bodens und Art der Anwendung 2 bis 6 kg/ha als erforderlich bezeichnet ; üblicherweise arbeitet man mit 2,5 bis 3,2 kg/ha.

Das 3-Cyclohexyl-5,6-trimethylen-uracil der Strukturformel

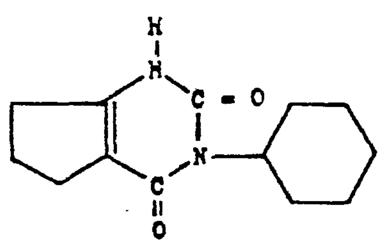

ist in US-PS 3 325 360 beschrieben und unter der freien Kurzbezeichnung Lenacil als selektives Herbizid mit Wirkung insbesondere gegen zweikeimblättrige Unkräuter u. a. auch in Rübenkulturen bekanntgeworden. Die dabei erforderlichen Aufwandmengen liegen bei 0,6 bis 1,2, allenfalls bis 2,0 kg/ha, wobei sich bei den oberen der genannten Werte aber bereits toxische Wirkungen auf die Kulturpflanzen bemerkbar machen. Die geringe Toleranzbreite zwischen der für die Unkrautbekämpfung nötigen Aufwandmenge und der zu Schädigung der Nutzpflanzen führenden Menge hat die Bedeutung dieser Substanz erheblich eingeschränkt ; sie kommt vorwiegend nur auf Böden mit hohem organischem Gehalt zur Anwendung.

Kein bis dahin bekanntgewordenes selektives Herbizid vermag allen Anforderungen gerecht zu werden, die an ein Mittel zur Unkrautbekämpfung beim Anbau auch nur einer einzigen Kulturpflanzengattung zu stellen sind. Die dabei zu berücksichtigenden Bedingungen hinsichtlich Klima, Bodentyp, Zusammensetzung der Unkrautgesellschaften, Anwendungsweise, Umweltschonung, Wirtschaftlichkeit zeigen eine derartige Variationsbreite, dass für das Auffinden eines allseitig befriedigenden einzelnen Wirkstoffes wenig Hoffnung besteht. Dies zeigt sich darin, dass mehr und mehr zur

Kombinierung geeigneter Wirkstoffe Zuflucht genommen wird. So sind denn auch bereits Unkrautbekämpfungsmittel beschrieben worden, welche Chloridazon bzw. Lenacil in Kombination mit weiteren herbiziden Wirkstoffen enthalten (vgl. u. a. DE-OS 2'311'897, FR-PS 2'242'932).

Im erfindungsgemässen Mittel konnte nun eine Kombination gefunden werden, welche die Eigenschaften der genannten einzelnen Wirkstoffe in besonders glücklicher Weise gegenseitig ergänzt und zu einer überraschenden Wirkungssteigerung führt. Mit Wirkstoffmengen, die gegenüber den für eine ausreichende Unkrautbekämpfung bei der Verwendung der Einzelwirkstoffe erforderlichen Mengen wesentlich reduziert sind, lässt sich mit der erfindungsgemässen Kombination sowohl bezüglich Wirkungsbreite als auch Wirkungsintensität eine wesentliche Steigerung erzielen. Daraus lässt sich ableiten, dass die erfindungsgemässe Kombination zu einem überadditiven, synergistischen Effekt führt.

Die folgende Tabelle I zeigt Resultate orientierender Gewächshausversuche, bei welchen die Wirkung erfindungsgemässer Kombinationen mit denjenigen der Einzelwirkstoffe allein oder in Zweierkombination sowie auch mit der Wirkung zweier Herbizidpräparate des Handels verglichen wurde. Für die Versuche wurden je zwei charakteristische einkeimblättrige und zweikeimblättrige Unkrautarten und als Kulturpflanze die Zuckerrübe ausgewählt. Die sechste und die neunte Kolonne der Tabelle enthalten die Durchschnittswerte der Wirkung auf die beiden einkeimblättrigen bzw. die beiden zweikeimblättrigen Unkrautarten.

Die bei den Versuchen eingesetzten Wirkstoffmengen wurden umgerechnet auf die Aufwandmenge in kg Wirkstoff (« active ingredient ») pro Hektar.

Die in der Tabelle I wiedergegebenen Wirkungsangaben wurden nach der Bonitierungsskala des European Weed Research Council (EWRC) bestimmt, wobei hier aber sowohl bei Unkraut als auch bei Zuckerrübe der Wert 1 völlige Wirkungslosigkeit und der Wert 9 100 % Abtötung bedeutet.

(Siehe Tabelle I Seite 4 f.)

Tabelle I

| Präparate und Aufwandmengen kg/ha a.i. | | | Abtötung der Testpflanzen bonitiert nach den Wertzahlen 1-9 (EWRC-Skala) 15 Tage nach der Behandlung | | | | | | |
|---|---|---|---|---|---|---|---|---|---|
| Methoxyphenone | Chloridazon | Lenacil | Avena fatua | Echinochloa crus galli | Ø Avena + Echinochloa | Amaranthus retroflexus | Stellaria media | Ø Amaranthus + Stellaria | Zuckerrübe |
| 3 | — | — | 6 | 7.5 | 6.8 | 5 | 8.3 | 6.7 | 1 |
| 3 | 1.6 | — | 7 | 7 | 7 | 7.5 | 9 | 8.3 | 1 |
| 3 | | 0.16 | 6.5 | 7 | 6.8 | 9 | 9 | 9 | 1 |
| 3 | 1.6 | 0.16 | 9 | 9 | 9 | 9 | 9 | 9 | 1 |
| 3 | 1.2 | — | 6 | 5.5 | 5.8 | 5 | 9 | 7 | 1 |
| 3 | 1.2 | 0.16 | 9 | 9 | 9 | 9 | 9 | 9 | 1 |
| 1.5 | — | — | 3.5 | 4.5 | 4 | 4 | 7.3 | 5.7 | 1 |
| 1.5 | 1.6 | — | 4.6 | 6 | 5.3 | 7.5 | 9 | 8.3 | 1 |
| 1.5 | — | 0.16 | 4 | 5.5 | 4.8 | 6.5 | 9 | 7.8 | 1 |
| 1.5 | 1.6 | 0.16 | 9 | 9 | 9 | 9 | 9 | 9 | 1 |
| 1.5 | 1.2 | — | 4 | 5.5 | 4.8 | 6 | 7.5 | 6.8 | 1 |
| 1.5 | 1.2 | 0.16 | 8.5 | 9 | 8.8 | 9 | 9 | 9 | 1 |
| 0.75 | — | — | 1.3 | 2 | 1.7 | 1 | 3 | 2 | 1 |
| 0.75 | 1.6 | — | 2 | 1 | 1.5 | 1 | 6.5 | 3.8 | 1 |
| 0.75 | — | 0.16 | 1 | 3 | 2 | 4.5 | 6 | 5.3 | 1 |
| 0.75 | 1.6 | 0.16 | 5.2 | 6 | 6.1 | 6.5 | 8.5 | 7.5 | 1 |
| 0.75 | 1.2 | — | 1 | 1 | 1 | 1 | 5.5 | 3.3 | 1 |
| 0.75 | 1.2 | 0.16 | 3.5 | 4.5 | 4 | 4.5 | 7 | 5.8 | 1 |
| — | 1.6 | — | 2 | 1 | 1.5 | 4.6 | 5 | 4.8 | 1 |
| — | 1.6 | 0.16 | 3.2 | 2.5 | 2.9 | 5.5 | 6 | 5.8 | 1 |
| — | 1.2 | — | 1 | 1 | 1 | 2.3 | 3 | 2.7 | 1 |
| | 1.2 | 0.16 | 2 | 1 | 1.5 | 4 | 7 | 5.5 | 1 |
| — | — | 0.16 | 1 | 1 | 1 | 3 | 4 | 3.5 | 1 |
| Vergleichspräparate 1) Pyramin® (69 % wp) 2.64 | | | 3.5 | 2 | 2.8 | 6.5 | 9 | 7.8 | 1 |
| 2) Goltix® (70 % wp) 3.5 | | | 4 | 2.5 | 3.3 | 8 | 9 | 8.5 | 3 |
| Unbehandelt | | | 1 | 1 | 1 | 1 | 1 | 1 | 1 |

Aus den Werten dieser Tabelle seien hier zur Erläuterung nur einige wenige Zahlen herausgegriffen, welche sich auf den Mittelwert der Wirkung auf die beiden einkeimblättrigen Unkräuter aus der Gramineen-Familie (Avena fatua und Echinochloa crus-galli) beziehen. Hier wurde bei Anwendung der Einzelwirkstoffe mit 3 kg Methoxyphenone ein Wert von 6,8 mit 1,6 kg Chloridazon ein Wert von 1,5 (entsprechend fast gänzlicher Wirkungslosigkeit) ermittelt. Im Falle von Zweier-Kombinationen wurde mit 3 kg Methoxyphenone plus 1,6 kg Choridazon ein Wert von 7, mit 3 kg Methoxyphenone plus 0,16 kg Lenacil ein Wert von 6,8 und mit 1,6 kg Chloridazon plus 0,16 kg Lenacil ein Wert von 2,9 erzielt. Im Falle der erfindungsgemässen Dreier-Kombination wurde mit der reduzierten Menge von nur 1,5 kg Methoxyphenone plus lediglich 1,2 kg Chloridazon plus 0,16 kg Lenacil dagegen eine Wirkung von 8,8 erzielt, was einer fast vollständigen Abtötung der Unkräuter entspricht.

Diese Daten sprechen dafür, daß man das entsprechend formulierte selektive Unkrautbekämpfungsmittel gemäß der Erfindung vorzugsweise in einer Aufwandmenge von 1 bis 5 kg/ha, berechnet auf das Wirkstoffgesamtgewicht, ausbringt, insbesondere vorzugsweise in einer Aufwandmenge von 2 bis 4 kg/ha.

Zur Erprobung wurden im schweizerischen Mittelland umfangreiche Feldversuche durchgeführt mit einem Dispersionskonzentrat der Code-Bezeichnung AE 1486, welches pro kg Präparat folgende Wirkstoffmengen enthielt :

310 g Methoxyphenone
335 g Chloridazon
40 g Lenacil

Parallel dazu wurden wiederum Versuche mit analogen Präparaten, welche die Wirkstoffe einzeln oder in der Zweier-Kombination Methoxyphenone plus Chloridazon enthielten, sowie mit zwei Handelspräparaten durchgeführt. Die dabei ermittelten Wirkungen auf neun ausgewählte Unkraut-Species und auf die Zuckerrübe sind in Form von Durchschnittswerten in der Tabelle II zusammengestellt.

Die dabei benützten Prozentangaben wurden berechnet nach Abbott aufgrund der Formel

$$(AK - AB)/AK \cdot 100$$

wobei AK die Individuenzahl der betreffenden Unkraut- Species pro Quadratmeter der unbehandelten Kontrollparzelle und AB die entsprechende Individuenzahl in der behandelten Parzelle bedeutet.

Die Zahlen der letzten Kolonne, welche über die Kulturverträglichkeit Aufschluss geben, wurden wiederum nach der Bonitierungs-Skala des EWRC ermittelt. Die Böden bestanden durchwegs aus mittelschwerem sandigem Lehm. Die Behandlung erfolgte anfangs April vor dem Keimen der Unkräuter (Vorauflaufverfahren) ; die Resultate wurden 8 bis 10 Wochen nach der Behandlung ermittelt.

(Siehe Tabelle II Seite 6 f.)

Tabelle II

| AE 1486 kg/ha | Wirkstoff und Aufwandmengen kg/ha a.i. | | | % Unkrautwirkung 8-10 Wochen nach der Behandlung | | | | | | | | | | | |
|---|---|---|---|---|---|---|---|---|---|---|---|---|---|---|---|
| | Methoxyphenone | Chloridazon | Lenacil | Capsella bursa pastoris | Chenopodium album | Matricaria chamomilla | Polygonum convolvulus | Stellaria media | Veronica persica | Ø dicotyle Unkräuter | Alopecurus myosuroides | Echinochloa crus galli | Poa annua | Ø monokotyle Unkräuter | Verträglichkeit an Zuckerrübe |
| 5<br>6 | 1.550<br>1.860 | 1.675<br>2.010 | 0.200<br>0.240 | 100<br>100 | 92<br>100 | 100<br>100 | 100<br>100 | 98<br>100 | 98<br>98 | 98<br>99 | 93<br>98 | 100<br>100 | 100<br>100 | 98<br>99 | 1<br>1 |
| Einzelkomponenten von AE 1486 | 1.55<br>1.860 | —<br>— | —<br>— | 43<br>68 | 65<br>68 | 65<br>82 | 36<br>58 | 27<br>29 | 0<br>33 | 39<br>56 | 29<br>75 | 8<br>91 | 0<br>54 | 12<br>73 | 1<br>1 |
| | —<br>— | 1.675<br>2.010 | —<br>— | 83<br>90 | 67<br>79 | 71<br>85 | 72<br>93 | 66<br>81 | 84<br>91 | 74<br>87 | 0<br>19 | 0<br>15 | 0<br>25 | 0<br>20 | 1<br>1 |
| | — | — | 0.240 | 56 | 48 | 62 | 19 | 85 | 79 | 58 | 12 | 0 | 29 | 14 | 1 |
| | 1.550<br>1.860 | 1.675<br>2.010 | —<br>— | 77<br>98 | 84<br>100 | 100<br>100 | 64<br>93 | 66<br>84 | 63<br>100 | 76<br>96 | 92<br>98 | 83<br>97 | 51<br>95 | 75<br>97 | 1<br>1 |
| Standardprodukte | Pyramin® (64 % wp) 2.56 | | | 96 | 84 | 86 | 97 | 88 | 95 | 91 | 12 | 22 | 38 | 24 | 1 |
| | Goltix® (70 % wp) 3.5 | | | 100 | 100 | 100 | 100 | 98 | 98 | 99 | 25 | 22 | 81 | 43 | 1 |

Die Zahlen der Tabelle bestätigen die im Vergleich mit Einzelsubstanzen, Zweier-Kombinationen und Handelspräparaten verbesserte Wirksamkeit des erfindungsgemässen Mittels.

Das Unkrautbekämpfungsmittel der Erfindung kann in grundsätzlich beliebiger Formulierung vorliegen ; es kann insbesondere ein Dispersions- bzw. Emulsionskonzentrat oder ein Spritzpulver sein, welches für die Anwendung mit Wasser verdünnt bzw. in Wasser suspendiert und so auf die gewünschte Konzentration gebracht wird. Es kann jedoch auch als direkt versprühbare Lösung, als Paste, Stäubemittel, Streumittel, Granulat oder Mikrogranulat formuliert sein, wie solche für agrochemische Produkte üblich sind. Die Anwendungsform bzw. Formulierung richtet sich naturgemäss nach der gewünschten Art der Verwendung ; wesentlich ist, dass damit eine feine, möglichst kolloidale Verteilung der Wirkstoffe gewährleistet wird. Dies bedeutet, dass das Mittel ausser den Wirkstoffen in aller Regel geeignete Mengen entsprechender Hilfs- und Zusatzstoffe wie Lösungs-, Verdünnungs-, Dispergier- und Netzmittel (Tenside), Trägerstoffe, Streckmittel, Haftvermittler und dgl. aufzuweisen hat, die etwa im Falle eines Granulates mengenmässig sogar stark überwiegen können.

Das Mittel der Erfindung kann demgemäss nach den üblichen, dem Fachmann geläufigen Formulierungstechniken hergestellt werden. Beispielsweise kann ein erfindungsgemässes Spritzpulver (benetzbares Pulver, wettable powder, « wp ») hergestellt werden, indem man

31,2 Gewichtsteile Methoxyphenone, technische Qualität mit 99 % Gehalt,
39,7 Gewichtsteile Chloridazon, technisches Produkt mit 84 % Gehalt, und
5,1 Gewichtsteile Lenacil, technisches Produkt mit 80 % Gehalt, mit
4,7 Gewichtsteilen Natriumligninsulfonat und
4,0 Gewichtsteilen Natriumalkylnaphthalinsulfonat als oberflächenaktiven Mitteln sowie
15,3 Gewichtsteilen Kieselsäure

vermischt und zu einem homogenen Pulver vermahlt.

Dieses Pulver kann für die Anwendung in beispielsweise der 30- bis 1 000-fachen und vorzugsweise etwa der 80- bis 350-fachen Gewichtsmenge Wasser dispergiert und in Aufwandmengen von etwa 1,5 bis 7,5 kg und vorzugsweise etwa von 3 bis 6 kg/ha auf den für die Kultur vorbereiteten Boden versprüht werden.

Das Mittel der Erfindung, das für die selektive Unkrautbekämpfung in beliebigen Pflanzenkulturen in Betracht kommt, hat sich als besonders geeignet erwiesen für die Anwendung im Vorauflaufverfahren, d. h. vor der Keimung und Entwicklung des Unkrautes, beim Anbau von Rübenarten wie Zuckerrübe, Futterrüben, rote Rühe (Rande oder rote Bete) usw.

**Patentansprüche**

1. Selektives Unkrautbekämpfungsmittel, dadurch gekennzeichnet, dass es als herbizide Wirkstoffe 4-Methoxy-3,3′ -dimethyl-benzophenon, und 5-Amino-4-chlor-2-pheny-3(2H)-pyridazinon in einem Gewichtsverhältnis von 2 : 1 bis 1 : 2,5 und als weiteren herbiziden Wirkstoff 3-Cyclohexyl-5,6-trimethylenuracil in einem Anteil von 3 bis 12 % des Wirkstoff-Gesamtgewichtes enthält.

2. Unkrautbekämpfungsmittel nach Anspruch 1, dadurch gekennzeichnet, dass das Gewichtsverhältnis zwischen dem genannten Benzophenonderivat und dem genannten Pyridazonderivat zwischen 1 : 1 bis 1 : 1,2 liegt.

3. Unkrautbekämpfungsmittel nach Anspruch 2, dadurch gekennzeichnet, dass der Anteil des genannten Uracilderivats 5 bis 7 % des Wirkstoff-Gesamtgewichtes ausmacht.

4. Verwendung des Unkrautbekämpfungsmittels nach einem der Ansprüche 1 bis 3 zur selektiven Unkrautbekämpfung in Nutzpflanzenkulturen durch Aufbringen einer wirksamen Menge des Mittels auf den Standort der Pflanzen oder die Pflanzen selbst.

5. Verwendung nach Anspruch 4, dadurch gekennzeichnet, dass man das Mittel in einer Aufwandmenge von 1 bis 5 kg/ha, berechnet auf das Wirkstoff-Gesamtgewicht, ausbringt.

6. Verwendung nach Anspruch 5, gekennzeichnet durch Aufwandmengen von 2 bis 4 kg/ha.

**Claims**

1. Selective herbicide, characterized in that it comprises as herbicidal active substances 4-methoxy-3,3′-dimethylbenzophenone, and 5-amino-4-chloro-2-phenyl-3(2H)-pyridazinone in a weight ratio from 2 : 1 to 1 : 2,5 and as a further herbicidal active substance 3-cyclohexyl-5,6-trimethylene-uracil in a fraction of 3 to 12 % of the total weight of the active substance.

2. Herbicide according to claim 1, characterized in that the weight ratio between said benzophenone derivative and said pyridazone derivative is included between 1 : 1 to 1 : 1.2.

3. Herbicide according to claim 2, characterized in that the fraction of said uracil derivative amounts to 5 to 7 % of the total weight of the active substance.

4. Use of the herbicide according to one of claims 1 to 3 for selective weed control within cultivations

of useful plants by applying an active quantity of the agent to the location of the plants or to the plants themselves.

5. Use according to claim 4, characterized in that the agent is applied to the soil in a concentration of 1 to 5 kg/ha calculated at the total weight of the active substance.

6. Use according to claim 5, characterized by concentrations of application of 2 to 4 kg/ha.

**Revendications**

1. Agent herbicide sélectif, caractérisé en ce qu'il contient comme substances herbicides actives la 4-méthoxy-3,3'-diméthylbenzophénone et la 5-amino-4-chloro-2-phényl-3(2H)-pyridazinone dans un rapport en poids compris entre 2/1 et 1/2,5 et comme substance herbicide additionnelle le 3-cyclohexyl-5,6-triméthylène-uracile en une proportion comprise entre 3 et 12 % par rapport au poids total de la substance active.

2. Agent herbicide selon la revendication 1, caractérisé en ce que le rapport en poids entre le dérivé de benzophénone cité et le dérivé de pyridazone cité est compris entre 1/1 et 1/1,2.

3. Agent herbicide selon la revendication 2, caractérisé en ce que la proportion du dérivé d'uracile cité est comprise entre 5 et 7 % du poids total de substance active.

4. Utilisation de l'agent herbicide selon l'une des revendications 1 à 3 pour la lutte sélective contre les mauvaises herbes dans des cultures de plantes utiles en répandant une quantité active de l'agent sur l'endroit où se trouvent les plantes ou sur les plantes elles-mêmes.

5. Utilisation selon la revendication 4, caractérisée en ce qu'on répand l'agent en une quantité de mise en œuvre comprise entre 1 et 5 kg/ha par rapport au poids total de la substance active.

6. Utilisation selon la revendication 5, caractérisée par des quantités mises en œuvre comprises entre 2 et 4 kg/ha.